(19) Europäisches Patentamt
European Patent Office
Office européen des brevets

(11) **EP 2 300 296 B1**

(12) **EUROPÄISCHE PATENTSCHRIFT**

(45) Veröffentlichungstag und Bekanntmachung des Hinweises auf die Patenterteilung:
**21.08.2013 Patentblatt 2013/34**

(51) Int Cl.:
**B60W 10/02** (2006.01)　　**B60W 10/06** (2006.01)
**B60K 6/48** (2007.10)　　**F02N 15/08** (2006.01)

(21) Anmeldenummer: **09780722.6**

(86) Internationale Anmeldenummer:
**PCT/EP2009/059167**

(22) Anmeldetag: **16.07.2009**

(87) Internationale Veröffentlichungsnummer:
**WO 2010/010041 (28.01.2010 Gazette 2010/04)**

(54) **VERFAHREN ZUM BETREIBEN EINES ANTRIEBSSTRANGS**

METHOD FOR OPERATING A DRIVETRAIN

PROCEDE PERMETTANT DE FAIRE FONCTIONNER UNE CHAINE CINEMATIQUE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **24.07.2008 DE 102008040662**

(43) Veröffentlichungstag der Anmeldung:
**30.03.2011 Patentblatt 2011/13**

(73) Patentinhaber: **ZF Friedrichshafen AG 88038 Friedrichshafen (DE)**

(72) Erfinder:
• **GROMUS, Michael**
  **88097 Eriskirch (DE)**
• **ALLGAIER, Bernd**
  **88079 Kressbronn (DE)**
• **TENBROCK, Friedrich**
  **88085 Langenargen (DE)**

(56) Entgegenhaltungen:
**DE-A1- 10 228 709**　　**DE-A1-102006 048 358**
**US-A1- 2004 060 753**

## Beschreibung

Die Erfindung betrifft ein Verfahren zum Betreiben eines zumindest ein Getriebe und einen Hybridantrieb umfassenden Antriebsstrangs eines Kraftfahrzeugs nach dem Oberbegriff des Anspruchs 1 bzw. 7.

Die Hauptkomponenten eines Antriebsstrangs eines Kraftfahrzeugs sind ein Antriebsaggregat und ein Getriebe. Ein Getriebe wandelt Drehmomente und Drehzahlen und setzt so das Zugkraftangebot des Antriebsaggregats um. Die hier vorliegende Erfindung betrifft ein Verfahren zum Betreiben eines Antriebsstrangs, der zumindest ein Getriebe und als Antriebsaggregat einen Hybridantrieb mit einem Verbrennungsmotor und einem Elektromotor umfasst.

Bei einem Antriebsstrang mit einem sogenannten Parallelhybridantrieb ist zwischen den Verbrennungsmotor und den Elektromotor des Hybridantriebs eine Kupplung geschaltet, über die der Verbrennungsmotor des Hybridantriebs von einem Abtrieb des Antriebsstrangs abgekoppelt werden kann. Beim Anfahren eines solchen Antriebsstrangs mit einem Parallelhybridantrieb ist der Verbrennungsmotor typischerweise ausgeschaltet und die zwischen den Verbrennungsmotor und den Elektromotor des Hybridantriebs geschaltete Kupplung geöffnet.

Dann, wenn der ausgeschaltete Verbrennungsmotor gestartet werden soll, kann derselbe durch zumindest teilweises Schließen der zwischen den Verbrennungsmotor und den Elektromotor geschalteten Kupplung vom Elektromotor aus angeschleppt werden, wobei zum optimalen Durchführen des Anschleppens des noch nicht gezündeten Verbrennungsmotors zumindest das sogenannte Losbrechmoment sowie vorzugsweise auch das sogenannte Reibmoment des Verbrennungsmotors bekannt sein muss. Bislang werden diese Momente vom Motorenhersteller vorgegeben und auf Grundlage dieser vorgegebenen Momente wird dann das Anschleppen durchgeführt.

Hierbei bleibt jedoch unberücksichtigt, dass sich das Losbrechmoment und das Reibmoment des Verbrennungsmotors über den Betrieb desselben ändern Kann. Dies hat dann ein suboptimales Anschleppen des Verbrennungsmotors zur Folge.

In der DE 10 2006 048 358 A1 ist ein Parallelhybridantriebsstrang angegeben, welcher einen Verbrennungsmotor, einen Elektromotor und ein Getriebe aufweist wobei zwischen Verbrennungsmotor und Elektromotor sowie zwischen Elektromotor und Getriebe jeweils eine Kupplung angeordnet ist. Hierbei wird ein Verfahren zum Starten des Verbrennungsmotors angegeben, bei welchem der in Betrieb befindliche Elektromotor die zwischen Elektromotor und Verbrennungsmotor angeordnete Kupplung mit einem vorgebbaren Moment beaufschlagt, die Drehzahl des Verbrennungsmotors überwacht und das Kupplungsmoment auf einen höheren Wert inkrementiert wird, falls die Drehzahl des Verbrennungsmotor innerhalb eines vorgebbaren Zeitintervalls unterhalb eines vorgebbaren Schwellwerts liegt.

Hiervon ausgehend liegt der vorliegenden Erfindung das Problem zu Grunde, ein neuartiges Verfahren zum Betreiben eines ein Getriebe und einen Hybridantrieb umfassenden Antriebsstrangs zu schaffen.

Dieses Problem wird nach einem ersten Aspekt der Erfindung durch ein Verfahren gemäß Anspruch 1 gelöst.

Hiernach wird beim Anschleppen des Verbrennungsmotors die zwischen den nicht gezündeten Verbrennungsmotor und den ein konstantes Elektromotormoment bereitstellenden Elektromotor geschaltete Kupplung derart schlüpfend geschlossen, dass über der Zeit das von der Kupplung übertragene Kupplungsmoment ausgehend von einem ersten Anfangswert bis zu einem ersten Endwert linear erhöht wird, wobei dann, wenn hierbei der nicht gezündete Verbrennungsmotor zu drehen beginnt, aus dem Kupplungsmoment, bei welchem der nicht gezündete Verbrennungsmotor zu drehen beginnt, das Losbrechmoment des Verbrennungsmotors ermittelt wird, und wobei dann, wenn hierbei der nicht gezündete Verbrennungsmotor nicht zu drehen beginnt, die zwischen den nicht gezündeten Verbrennungsmotor und den Elektromotor geschahete Kupplung derart schlupfend geschlossen wird, dass über der Zeit das von der Kupplung übertragene Kupplungsmoment ausgehend von einem zweiten Anfangswert linear erhöht wird, bis der nicht gezündete Verbrennungsmotor zu drehen beginnt, wobei aus dem Kupplungsmoment, bei welchem der Verbrennungsmotor zu drehen beginnt, das Losbrechmoment des Verbrennungsmotors ermittelt wird.

Nach einem zweiten Aspekt der Erfindung wird dieses Problem durch ein Verfahren gemäß Anspruch 7 gelöst.

Hiernach wird beim Anschleppen des Verbrennungsmotors die zwischen den nicht gezündeten Verbrennungsmotor und den Elektromotor geschaltete Kupplung vollständig geschlossen und über der Zeit das vom Elektromotor bereitgestellte Elektromotormoment ausgehend von einem ersten Anfangswert bis zu einem ersten Endwert linear erhöht, wobei dann, wenn hierbei der nicht gezündete Verbrennungsmotor zu drehen beginnt, aus dem Elektromotormoment, bei welchem der nicht gezündete Verbrennungsmotor zu drehen beginnt, das Losbrechmoment des Verbrennungsmotors ermittelt wird, und wobei dann, wenn hierbei der nicht gezündete Verbrennungsmotor nicht zu drehen beginnt, das vom Elektromotor bereitgestellte Elektromotormoment ausgehend von einem zweiten Anfangswert linear erhöht wird, bis der nicht gezündete Verbrennungsmotor zu drehen beginnt, wobei aus dem Elektromotormoment, bei welchem der Verbrennungsmotor zu drehen beginnt, das Losbrechmoment des Verbrennungsmotors ermittelt wird.

Mit der Erfindung ist es möglich, während des Anschleppens zumindest das Losbrechmoment sowie vorzugsweise auch das sogenannte Reibmoment des Verbrennungsmotors zu ermitteln und so über den Betrieb desselben zu adaptieren, um stets ein optimales Anschleppen des Verbrennungsmotors zu gewährleisten.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher ertäutert. Dabei zeigt:

Fig. 1    ein Antriebsstrangschema eines Kraftfahrzeugs, bei welchem das erfindungsgemäße Verfahren einsetzbar ist;

Fig. 2    ein alternatives Antriebsstrangschema eines Kraftfahrzeugs, bei welchem das erfindungsgemäße Verfahren einsetzbar ist;

Fig. 3    ein Diagramm zur Verdeutlichung des erfindungsgemäßen Verfahrens.

Die hier vorliegende Erfindung betrifft ein Verfahren zum Betreiben eines zumindest ein Getriebe und einen Hybridantrieb umfassenden Antriebsstrangs eines Kraftfahrzeugs.

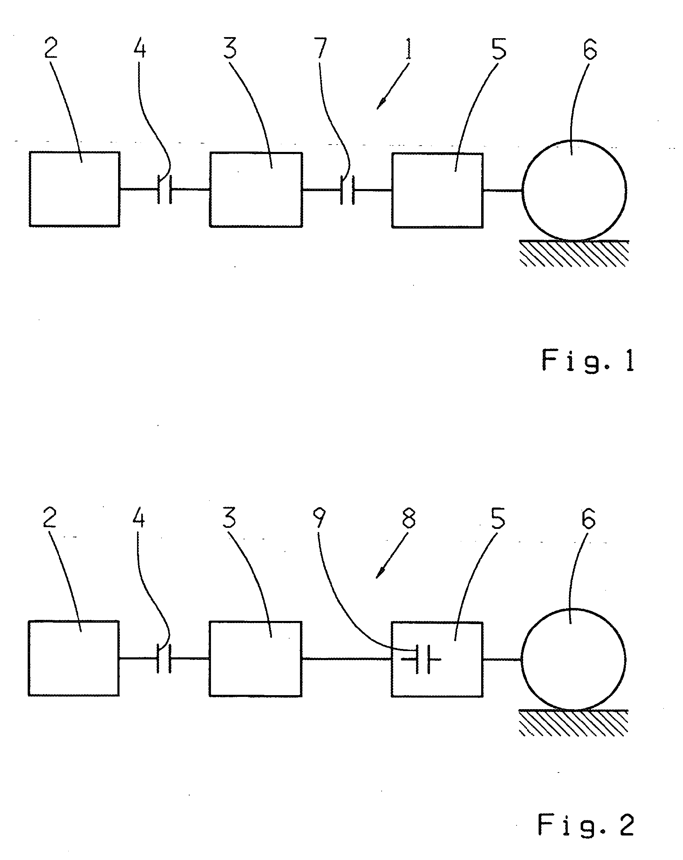

Fig. 1 zeigt exemplarisch ein Antriebsstrangschema eines Kraftfahrzeugs, bei welchen das erfindungsgemäße Verfahren einsetzbar ist. So zeigt Fig. 1 ein Schema eines Antriebsstrangs 1 eines Kraftfahrzeugs, wobei der Antriebsstrang 1 gemäß Fig. 1 einen Hybridantrieb umfasst, der von einem Verbrennungsmotor 2 und einem Elektromotor 3 gebildet ist. Zwischen den Verbrennungsmotor 2 und den Elektromotor 3 ist eine Kupplung 4 geschaltet, die dann, wenn der Antriebsstrang 1 ausschließlich vom Elektromotor 3 betrieben wird, geöffnet ist.

Neben dem Hybridantrieb umfasst der Antriebsstrang 1 gemäß Fig. 1 weiterhin ein Getriebe 5, welches das vom Hybridantrieb bereitgestellte Zugkraftangebot auf einem Abtrieb 6, nämlich anzutreibenden Rädern, des Antriebsstrangs umsetzt. Das Getriebe kann z. B. als Automatgetriebe oder als automatisiertes Getriebe ausgeführt sein. Bei einem Automatgetriebe werden Schaltungen ohne Zugkraftunterbrechung und bei einem automatisierten Getriebe werden Schaltungen mit Zugkraftunterbrechung ausgeführt.

Beim Antriebsstrang der Fig. 1 ist zwischen den Elektromotor 3 des Hybridantriebs und das Getriebe 5 eine weitere Kupplung 7 geschaltet. Diese Kupplung 7 dient als getriebeexternes Anfahrelement beim elektromotorischen Anfahren.

Fig. 2 zeigt exemplarisch ein weiteres Antriebsstrangschema eines Kraftfahrzeugs, bei welchen das erfindungsgemäße Verfahren einsetzbar ist, wobei sich der Antriebsstrang 8 des Antriebsstrangschemas der Fig. 2 vom Antriebsstrang 1 des Antriebsstrangschemas der Fig. 1 dadurch unterscheidet, dass die Kupplung 7 bzw. das getriebeexterne Anfahrelement entfällt und durch ein getriebeinternes Anfahrelement 9 ersetzt ist.

Die hier vorliegende Erfindung betrifft ein Verfahren zum Betreiben eines solchen Antriebsstrangs mit einem Getriebe und einem Hybridantrieb, nämlich solche Details, die das Anschleppen eines ausgeschalteten, nicht gezündeten Verbrennungsmotors 2 mit Hilfe des Elektromotors 3 des Hybridantriebs betreffen.

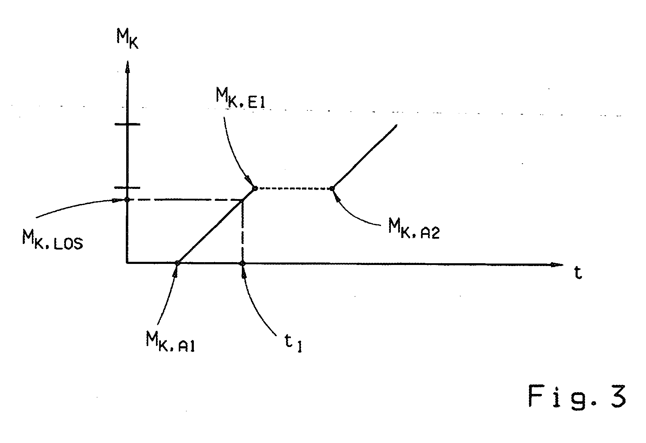

Dabei wird beim Anschleppen des Verbrennungsmotors 2 über den Elektromotor 3 die zwischen den nicht gezündeten Verbrennungsmotor 2 und den ein konstantes Elektromotormoment bereitstellenden Elektromotor 3 geschaltete Kupplung 4 schlupfend geschlossen, nämlich derart, dass über der Zeit das von der Kupplung übertragene Kupplungsmoment ausgehend von einem ersten Anfangswert bis zu einem ersten Endwert linear erhöht wird. In Fig. 3 ist über der Zeit t das von der Kupplung 4 bereitgestellte Momente $M_K$ aufgetragen, wobei Fig. 3 entnommen werden kann, dass über der Zeit t durch zunehmendes schlupfendes Schließen der Kupplung 4 das von derselben übertragene Kupplungsmoment $M_K$ ausgehend von dem ersten Anfangswert $M_{K,A1}$ bis zum ersten Endwert $M_{K,E1}$ entlang einer Rampe linear erhöht wird.

Dann, wenn hierbei der nicht gezündete Verbrennungsmotor 2 zu drehen beginnt, wird aus dem Kupplungsmoment $M_K$, bei welchem der nicht gezündete Verbrennungsmotor 2 zu drehen beginnt, das Losbrechmoment des Verbrennungsmotors 2 ermittelt.

In Fig. 3 wird davon ausgegangen, dass zum Zeitpunkt $t_1$ der nicht gezündete Verbrennungsmotor zu drehen beginnt, sodass aus dem zu diesem Zeitpunkt $t_1$ von der Kupplung 4 übertragenen Kupplungsmoment $M_{K,LOS}$ das Losbrechmoment des Verbrennungsmotors 2 bestimmt wird.

Dann, wenn bei der linearen Erhöhung des von der Kupplung 4 übertragenen Kupplungsmoments $M_K$ ausgehend vom ersten Anfangswert $M_{K,A1}$ in Richtung auf den ersten Endwert $M_{K,E1}$ der Verbrennungsmotor 2 nicht zu drehen beginnt, wird die Kupplung 4 zwischen dem Verbrennungsmotor 2 und dem Elektromotor 3 derart schlupfend geschlossen, dass über der Zeit t das von der Kupplung 4 übertragene Kupplungsmoment $M_K$ ausgehend von einem zweiten Anfangswert $M_{K,A2}$ linear erhöht wird, und zwar so lange, bis der nicht gezündete Verbrennungsmotor 2 zu drehen beginnt.

Aus dem Kupplungsmoment $M_K$, bei welchem dann der Verbrennungsmotor 2 zu drehen beginnt, wird wiederum das Losbrechmoment des Verbrennungsmotors 2 ermittelt. Vorzugsweise ist der zweite Anfangswert $M_{K,A2}$ größer als der erste Endwert $M_{K,E1}$, derselbe kann jedoch auch kleiner oder größer als der erste Endwert sein. In jedem Fall ist jedoch der zweite Anfangswert $M_{K,A2}$ größer als der erste Anfangswert $M_{K,A1}$.

Es liegt weiterhin im Sinne der hier vorliegenden Erfindung, dass dann, wenn auf die obige Art und Weise beim Anschleppen des Verbrennungsmotors 2 über den Elektromotor 3 das Losbrechmoment des Verbrennungsmotors 2 ermittelt wird, auf Basis des ermittelten Losbrechmoments des Verbrennungsmotors 2 den ersten Endwert $M_{K,E1}$ zu adaptieren, wobei hierzu das ermittelte Losbrechmoment des Verbrennungsmotors 2 mit einem Sicherheitsoffsetwert verrechnet wird, um dann abhängig hiervon den ersten Endwert $M_{K,E1}$ anzupassen.

Dann, wenn der nicht gezündete Verbrennungsmotor 2 bei der Erhöhung des Kupplungsmoments $M_K$ ausgehend vom ersten Anfangswert $M_{K, A1}$ zu drehen beginnt, erfolgt die Adaption des ersten Endwerts $M_{K, E1}$ vorzugsweise derart, dass als neuer erster Endwert der Wert verwendet wird, der sich aus dem mit dem Sicherheitsoffsetwert verrechneten Losbrechmoment ergibt. Dann, wenn der nicht gezündete Verbrennungsmotor 2 bei der Erhöhung des Kupplungsmoments $M_K$ ausgehend vom zweiten Anfangswert $M_{K, A2}$ zu drehen beginnt, wird der erste Endwert vorzugsweise derart adaptiert, dass das aus dem Losbrechmoment und dem Sicherheitsoffsetwert ermittelte Moment mit dem bisherigen ersten Endwert zur Bestimmung des neuen ersten Endwerts im Sinne einer gewichteten Summe verrechnet wird.

Mit der hier vorliegenden Erfindung kann demnach der erste Endwert $M_{K, E1}$ mit Hilfe des beim Anschleppen ermittelten Losbrechmoments des Verbrennungsmotors 2 fortlaufend adaptiert werden, sodass über die gesamte Lebensdauer des Kraftfahrzeugs ein optimales Anschleppen des Verbrennungsmotors 2 über den Elektromotor 3 möglich ist.

Bei drehendem, jedoch nicht gezündetem Verbrennungsmotor kann dann das Reibmoment des Verbrennungsmotors unter Bestimmung der folgenden Momentenbilanz rechnerisch ermittelt werden:

$$M_{VM,REIB} = M_K - J_{GES1} * \frac{d}{dt}(w(t)) \, ,$$

wobei $M_{VM, REIB}$ das Reibmoment des Verbrennungsmotors 2 ist, wobei $M_K$ das von der zwischen den Verbrennungsmotor 2 und den Elektromotor 3 geschalteten, schlupfenden Kupplung 4 übertragene Kupplungsmoment ist, wobei $J_{GES1}$ das Trägheitsmoment des Antriebsstrangs bis zur schlupfenden Kupplung 4 ist, und wobei w die Drehwinkelgeschwindigkeit des Verbrennungsmotors 2 ist.

Ferner erfolgt das ermitteln des Losbrechmoments sowie Reibmoments des Verbrennungsmotors 2 zur Adaption bei vollständig geschlossener Kupplung 4, wobei dann das vom Elektromotor 3 bereitgestellte Elektromotormoment $M_{EM}$ ausgehend von einem ersten Anfangswert in Richtung auf einen ersten Endwert linear erhöht wird. Das erfindungsgemäße Verfahren läuft dann analog zum ersten Aspekt der hier vorliegenden Erfindung ab, wobei beim ersten Aspekt der hier vorliegenden Erfindung der Elektromotor 3 ein konstantes Elektromotormoment bereitstellt und die Kupplung 4 ein variables Kupplungsmoment überträgt, und wobei beim zweiten Aspekt der hier vorliegenden Erfindung die Kupplung 4 ein konstantes Kupplungsmoment überträgt und das vom Elektromotor bereitgestellte Elektromotormoment linear erhöht wird, um dann so das Losbrechmoment sowie Reibmoment des Verbrennungsmotors 2 zu ermitteln. Das Losbrechmoment des Verbrennungsmotors 2 wird dann aus dem vom Elektromotor 3 bereitgestellten Elektromotormoment ermittelt, bei welchem der nicht gezündete Verbrennungsmotor 2 zu drehen beginnt. Hinsichtlich aller weiterer Details kann auf den ersten Aspekt der Erfindung verwiesen werden.

Bei drehendem, jedoch nicht gezündetem Verbrennungsmotor kann nach dem zweiten Aspekt der Erfindung das Reibmoment des Verbrennungsmotors unter Bestimmung der folgenden Momentenbilanz rechnerisch ermittelt werden:

$$M_{VM,REIB} = M_{EM} - J_{GES2} * \frac{d}{dt}(w(t)) \, ,$$

wobei $M_{VM, REIB}$ das Reibmoment des Verbrennungsmotors ist, wobei $M_{EM}$ das vom Elektromotor bereitgestellte Elektromotormoment ist, wobei $J_{GES2}$ das Trägheitsmoment des Antriebsstrangs ist, und wobei w die Drehwinkelgeschwindigkeit des Verbrennungsmotors ist.

Dann, wenn der Antriebsstrang ein Anfahrelement 7 bzw. 9 umfasst, welches sich im Schlupf befindet, entspricht das Trägheitsmoment $J_{GES2}$ dem Trägheitsmoment des Antriebsstrangs bis zum schlupfenden Anfahrelement 7 bzw. 9. Dann hingegen, wenn kein schlupfendes Anfahrelement vorhanden ist, beträgt das Trägheitsmoment $J_{GES2}$ dem Trägheitsmoment des gesamten Antriebsstrangs.

Im Sinne der hier vorliegenden Erfindung wird demnach das Losbrechmoment des Verbrennungsmotors 2 und weiterhin vorzugsweise auch das Reibmoment desselben betriebspunktabhängig ermittelt und adaptiert, um so dass Anschleppen des Verbrennungsmotors 2 mit Hilfe des Elektromotors 3 optimal ausführen zu können.

Bezugszeichen

1 Antriebsstrang
2 Verbrennungsmotor
3 Elektromotor
4 Kupplung
5 Getriebe
6 Abtrieb
7 Kupplung / getriebeexternes Anfahrelement
8 Antriebsstrang
9 getriebeinternes Anfahrelement

**Patentansprüche**

1. Verfahren zum Betreiben eines Antriebsstrangs (1) eines Kraftfahrzeugs, wobei der Antriebsstrang (1) zumindest einen Hybridantrieb mit einem Verbrennungsmotor (2) und einem Elektromotor (3), eine zwischen den Verbrennungsmotor (2) und den Elektromotor (3) geschaltete Kupplung (4), ein zwischen dem Hybridantrieb und einem Abtrieb (6) angeordnetes Getriebe (5), sowie vorzugsweise ein getriebeinternes oder getriebeexternes Anfahrelement (9; 7) umfasst, wobei beim Anschleppen des Verbrennungsmotors (2) mit Hilfe des Elektromotors (3) die zwischen den nicht gezündeten Verbrennungsmotor (2) und den ein konstantes Elektromotormoment bereitstellenden Elektromotor (3) geschaltete Kupplung (4) derart schlupfend geschlossen wird, dass über der Zeit das von der Kupplung (4) übertragene Kupplungsmoment ausgehend von einem ersten Anfangswert ($M_{K,A1}$) bis zu einem ersten Endwert ($M_{K,E1}$) linear erhöht wird, **dadurch gekennzeichnet, dass** dann, wenn hierbei der nicht gezündete Verbrennungsmotor (2) zu drehen beginnt, aus dem Kupplungsmoment ($M_K$), bei welchem der nicht gezündete Verbrennungsmotor (2) zu drehen beginnt, das Losbrechmoment des Verbrennungsmotors (2) ermittelt wird, und wobei dann, wenn hierbei der nicht gezündete Verbrennungsmotor (2) nicht zu drehen beginnt, die zwischen den nicht gezündeten Verbrennungsmotor (2) und den Elektromotor (3) geschaltete Kupplung (4) derart schlupfend geschlossen wird, dass über der Zeit das von der Kupplung (4) übertragene Kupplungsmoment ($M_K$) ausgehend von einem zweiten Anfangswert ($M_{K,A2}$) linear erhöht wird, bis der nicht gezündete Verbrennungsmotor (2) zu drehen beginnt, wobei aus dem Kupplungsmoment ($M_K$), bei welchem der Verbrennungsmotor (2) zu drehen beginnt, das Losbrechmoment des Verbrennungsmotors (2) ermittelt wird.

2. Verfahren nach Anspruch 1, **dadurch gekennzeichnet, dass** der zweite Anfangswert ($M_{K,A2}$) größer als der erste Anfangswert ($M_{K,A1}$) und vorzugsweise größer als der erste Endwert ($M_{K,E1}$) ist.

3. Verfahren nach Anspruch 1 oder 2, **dadurch gekennzeichnet, dass** das ermittelte Losbrechmoment des Verbrennungsmotors (2) mit einem Sicherheitsoffsetwert verrechnet wird und dass abhängig von dem hierbei ermittelten Moment der erste Endwert ($M_{K,E1}$) adaptiert wird.

4. Verfahren nach Anspruch 3, **dadurch gekennzeichnet, dass** der erste Endwert ($M_{K,E1}$) derart adaptiert wird, dass das aus dem Lösbrechmoment und dem Sicherheitsoffsetwert ermittelte Moment als neuer erster Endwert verwendet wird, nämlich insbesondere dann, wenn der nicht gezündete Verbrennungsmotor (2) bei der Erhöhung des Kupplungsmoments ausgehend vom ersten Anfangswert ($M_{K,A1}$) zu drehen beginnt.

5. Verfahren nach Anspruch 3, **dadurch gekennzeichnet, dass** der erste Endwert ($M_{K,E1}$) derart adaptiert wird, dass das aus dem Losbrechmoment und dem Sicherheitsoffsetwert ermittelte Moment mit dem bisherigen ersten Endwert zur Bestimmung des neuen ersten Endwerts verrechnet wird, nämlich insbesondere dann, wenn der nicht gezündete Verbrennungsmotor (2) bei er Erhöhung des Kupplungsmoments ausgehend vom zweiten des Kupplungsmoments ausgehend vom zweiten Anfangswert ($M_{K,A2}$) zu drehen beginnt.

6. Verfahren nach einem der Ansprüche 1 bis 5, **dadurch gekennzeichnet**, bei einem drehenden, jedoch nicht gezündetem Verbrennungsmotor (2) das Reibmoment des Verbrennungsmotors (2) unter Bestimmung der folgenden Momentenbilanz rechnerisch ermittelt wird:

$$M_{VM,REIB} = M_K - J_{GES1} * \frac{d}{dt}(w(t)),$$

wobei $M_{VM, REIB}$ das Reibmoment des Verbrennungsmotors (2) ist, wobei $M_K$ das von der zwischen den Verbrennungsmotor (2) und den Elektromotor (3) geschalteten, schlupfenden Kupplung (4) übertragene Kupplungsmoment ist, wobei $J_{GES1}$ das Trägheitsmoment des Antriebsstrangs (1) bis zur schlupfenden Kupplung (4) ist, und wobei w die Drehwinkelgeschwindigkeit des Verbrennungsmotors (2) ist.

7. Verfahren zum Betreiben eines Antriebsstrangs (1) eines Kraftfahrzeugs, wobei der Antriebsstrang (1) zumindest einen Hybridantrieb mit einem Verbrennungsmotor (2) und einem Elektromotor (3), eine zwischen den Verbrennungsmotor (2) und den Elektromotor (3) geschaltete Kupplung (4), ein zwischen dem Hybridantrieb und einem Abtrieb angeordnetes Getriebe (5), sowie vorzugsweise ein getriebeinternes oder getriebeexternes Anfahrelement (9; 7) umfasst, wobei beim Anschleppen des Verbrennungsmotors (2) mit Hilfe des Elektromotors (3) die zwischen den nicht gezündeten Verbrennungsmotor (2) und den Elektromotor (3) geschaltete Kupplung (4) vollständig geschlossen und über der Zeit das vom Elektromotor (3) bereitgestellte Elektromotormment ausgehend von einem ersten Anfangswert ($M_{K,A1}$) bis zu einem ersten Endwert ($M_{K,E1}$) linear erhöht wird, **dadurch gekennzeichnet, dass** dann, wenn hierbei der nicht gezündete Verbrennungsmotor (2) zu drehen beginnt, aus dem Elektromotormoment ($M_{EM}$) bei welchem der nicht gezündete Verbrennungsmotor (2) zu drehen beginnt, das Losbrechmoment des Verbrennungsmotors (2) ermittelt wird, und wobei dann, wenn hierbei der nicht gezündete Verbrennungsmotor (2) nicht zu drehen beginnt, das vom Elektromotor (3) bereitgestellte Elektromotormoment ($M_{EM}$) ausgehend von einem zweiten Anfangswert ($M_{K, A2}$) linear erhöht wird, bis der nicht gezündete Verbrennungsmotor (2) zu drehen beginnt, wobei aus dem Elektromotormoment ($M_{EM}$), bei welchem der Verbrennungsmotor (2) zu drehen beginnt, das Losbrechmoment des Verbrennungsmotors (2) ermittelt wird.

8. Verfahren nach Anspruch 7, **dadurch gekennzeichnet, dass** der zweite Anfangswert ($M_{K,A2}$) größer als der erste Anfangswert ($M_{K,A1}$) und vorzugsweise größer als der erste Endwert ($M_{K,E1}$) ist.

9. Verfahren nach Anspruch 7 oder 8, **dadurch gekennzeichnet, dass** das ermittelte Losbrechmoment des Verbrennungsmotors (2) mit einem Sicherheitsoffsetwert verrechnet wird, und dass abhängig von dem hierbei ermittelten Moment der erste Endwert ($M_{K,E1}$) adaptiert wird.

10. Verfahren nach Anspruch 9, **dadurch gekennzeichnet, dass** der erste Endwert ($M_{K,E1}$) derart adaptiert wird, dass das aus dem Losbrechmoment und dem Sicherheitsoffsetwert ermittelte Moment als neuer erster Endwert verwendet wird, nämlich insbesondere dann, wenn der nicht gezündete Verbrennungsmotor (2) bei der Erhöhung des Elektromotormoments ($M_{EM}$) ausgehend vom ersten Anfangswert zu drehen beginnt.

11. Verfahren nach Anspruch 9, **dadurch gekennzeichnet, dass** der erste Endwert ($M_{K,E1}$) derart adaptiert wird, dass das aus dem Losbrechmoment und dem Sicherheitsoffsetwert ermittelte Moment mit dem bisherigen ersten Endwert zur Bestimmung des neuen ersten Endwerts verrechnet wird, nämlich insbesondere dann, wenn der nicht gezündete Verbrennungsmotor (2) bei der Erhöhung des Elektromotormoments ($M_{EM}$) ausgehend vom zweiten Anfangswert zu drehen beginnt.

12. Verfahren nach einem der Ansprüche 7 bis 11, **dadurch gekennzeichnet**, bei einem drehenden, jedoch nicht gezündetem Verbrennungsmotor (2) das Reibmoment des Verbrennungsmotors (2) unter Bestimmung der folgenden Momentenbilanz rechnerisch ermittelt wird:

$$M_{VM, REIB} = M_{EM} - J_{GES2} * \frac{d}{dt}(w(t)),$$

wobei $M_{VM, REIB}$ das Reibmoment des Verbrennungsmotors (2) ist, wobei $M_{EM}$ das vom Elektromotor (3) bereitgestellte Elektromotormoment ist, wobei $J_{GES2}$ das Trägheitsmoment des Antriebsstrangs (1) ist, und wobei w die Drehwinkelgeschwindigkeit des Verbrennungsmotors (2) ist.

**Claims**

1. Method for operating a drive train (1) of a motor vehicle, wherein the drive train (1) comprises at least one hybrid drive with an internal combustion engine (2) and an electric motor (3), a clutch (4) which is connected between the internal combustion engine (2) and the electric motor (3), a transmission (5) which is arranged between the hybrid drive and an output (6), as well as preferably a transmission-internal or transmission-external starting element (9;

7), wherein when the internal combustion engine (2) is started with the aid of the electric motor (3), the clutch (4) which is connected between the internal combustion engine (2) which is not fired and the electric motor (3) which makes available a constant electric motor torque is closed in a slipping fashion such that over time the clutch torque which is transmitted by the clutch (4) is increased linearly starting from a first initial value ($M_k$, A1) to a final value ($M_k$, E1),

**characterized in that** when in this context the internal combustion engine (2) which is not fired begins to rotate, the breakaway torque of the internal combustion engine (2) is determined from the clutch torque ($M_k$) at which the internal combustion engine (2) which is not fired begins to rotate, and wherein when in this context the internal combustion engine (2) which is not fired does not begin to rotate, the clutch (4) which is connected between the internal combustion engine (2) which is not fired and the electric motor (3) is closed in a slipping fashion such that over time the clutch torque ($M_k$) which is transmitted by the clutch (4) is increased linearly starting from a second initial value ($M_k$, A2) until the internal combustion engine (2) which is not fired begins to rotate, wherein the breakaway torque of the internal combustion engine (2) is determined from the clutch torque ($M_k$) at which the internal combustion engine (2) begins to rotate.

2. Method according to Claim 1, **characterized in that** the second initial value ($M_k$, A2) is higher than the first initial value ($M_k$, A1) and preferably higher than the first final value ($M_k$, E1).

3. Method according to Claim 1 or 2, **characterized in that** the determined breakaway torque of the internal combustion engine (2) is combined with a safety offset value, and **in that** the first final value ($M_k$, E1) is adapted as a function of the torque which is determined here.

4. Method according to Claim 3, **characterized in that** the first final value ($M_k$, E1) is adapted in such a way that the torque which is determined from the breakaway torque and the safety offset value is used as a new first final value, specifically, in particular, when the internal combustion engine (2) which is not fired begins to rotate when the clutch torque is increased starting from the first initial value ($M_k$, A1).

5. Method according to Claim 3, **characterized in that** the first final value ($M_k$, E1) is adapted in such a way that the torque which is determined from the breakaway torque and the safety offset value is combined with the previous first final value in order to determine the new first final value, specifically, in particular, when the internal combustion engine (2) which is not fired begins to rotate when the clutch torque is increased starting from the second initial value ($M_k$, A2).

6. Method according to one of Claims 1 to 5, **characterized in that** when an internal combustion engine (2) is rotating but has not yet fired, the frictional torque of the internal combustion engine (2) is determined computationally by determining the following torque balance:

$$M_{VM,\text{FRICTION}} = M_K - J_{GES1} \star \frac{d}{dt}(w(t)),$$

where $M_{VM,\text{FRICTION}}$ is the frictional torque of the internal combustion engine (2), where $M_K$ is the clutch torque which is transmitted by the slipping clutch (4) which is connected between the internal combustion engine (2) and the electric motor (3), where $J_{GES1}$ is the moment of inertia of the drive train (1) until the clutch (4) slips, and where w is the rotational angle speed of the internal combustion engine (2).

7. Method for operating a drive train (1) of a motor vehicle, wherein the drive train (1) comprises at least one hybrid drive with an internal combustion engine (2) and an electric motor (3), a clutch (4) which is connected between the internal combustion engine (2) and the electric motor (3), a transmission (5) which is arranged between the hybrid drive and an output, as well as preferably a transmission-internal or transmission-external starting element (9; 7), wherein when the internal combustion engine (2) is started with the aid of the electric motor (3), the clutch (4) which is connected between the internal combustion engine (2) which is not fired and the electric motor (3) is completely closed, and over time the electric motor torque which is made available by the electric motor (3) is increased linearly starting from a first initial value ($M_k$, A1) to a final value ($M_k$, E1),

**characterized in that** when in this context the internal combustion engine (2) which is not fired begins to rotate, the breakaway torque of the internal combustion engine (2) is determined from the electric motor torque ($M_{EM}$) at which the internal combustion engine (2) which is not fired begins to rotate, and wherein when in this context the internal combustion engine (2) which is not fired does not begin to rotate, the electric motor torque ($M_{EM}$) which is made available by the electric motor (3) is increased linearly starting from a second initial value ($M_K$, A2) until the internal combustion engine (2) which is not fired begins to rotate, wherein the breakaway torque of the internal combustion engine (2) is determined from the electric motor torque ($M_{EM}$) at which the internal combustion (2) begins to rotate.

8. Method according to Claim 7, **characterized in that** the second initial value ($M_K$, A2) is higher than the first initial value ($M_K$, A1) and preferably higher than the first final value ($M_k$, E1).

9. Method according to Claim 7 or 8, **characterized in that** the determined breakaway torque of the internal combustion engine (2) is combined with a safety offset value, and **in that** the first final value ($M_K$, E1) is adapted as a function of the torque which is determined here.

10. Method according to Claim 9, **characterized in that** the first final value ($M_k$, E1) is adapted in such a way that the torque which is determined from the breakaway torque and the safety offset value is used as a new first final value, specifically, in particular, when the internal combustion engine (2) which is not fired begins to rotate when the electric motor torque ($M_{EM}$) is increased starting from the first initial value.

11. Method according to Claim 9, **characterized in that** the first final value ($M_k$, E1) is adapted in such a way that the torque which is determined from the breakaway torque and the safety offset value is combined with the previous first final value in order to determine the new first final value, specifically, in particular, when the internal combustion engine (2) which is not fired begins to rotate when the electric motor torque ($M_{EM}$) is increased starting from the second initial value.

12. Method according to one of Claims 7 to 11, **characterized in that** when an internal combustion engine (2) is rotating but has not yet fired, the frictional torque of the internal combustion engine (2) is determined computationally by determining the following torque balance:

$$M_{VM,FRICTION} \ = \ M_{EM} \ -J_{GES2} \ * \frac{d}{dt}(w(t)),$$

where $M_{VM,FRICTION}$ is the frictional torque of the internal combustion engine (2), where $M_{EM}$ is the electric motor torque which is made available by the electric motor (3), where $J_{GES2}$ is the moment of inertia of the drive train (1), and where w is the rotational angle speed of the internal combustion engine (2).

## Revendications

1. Procédé pour faire fonctionner une chaîne de transmission (1) d'un véhicule automobile, la chaîne de transmission (1) incluant au moins un groupe propulseur hybride comprenant un moteur à combustion interne (2) et un moteur électrique (3), un accouplement (4) connecté entre le moteur à combustion interne (2) et le moteur électrique (3), une boîte de vitesses (5) disposée entre le groupe propulseur hybride et une prise de force (6), ainsi qu'un élément de démarrage (9 ; 7), de préférence interne à la boîte de vitesses ou externe à la boîte de vitesses, procédé selon lequel, lors du démarrage assisté du moteur à combustion interne (2) à l'aide du moteur électrique (3), l'accouplement (4) connecté entre le moteur à combustion interne (2) non allumé et le moteur électrique (3) qui délivre un couple de moteur électrique constant est embrayé en patinant de telle sorte que le couple d'accouplement transmis par l'accouplement (4) augmente de façon linéaire dans le temps à partir d'une première valeur de départ ($M_K$, A1) jusqu'à une première valeur finale ($M_K$, E1), **caractérisé en ce que** lorsque le moteur à combustion interne (2) non allumé commence ainsi à tourner, le couple de décollage du moteur à combustion interne (2) est déterminé à partir du couple d'accouplement ($M_K$) auquel le moteur à combustion interne (2) non allumé commence à tourner, et lorsque le moteur à combustion interne (2) non allumé ne commence ainsi pas à tourner, l'accouplement (4) connecté entre le moteur à combustion interne (2) non allumé et le moteur électrique (3) étant alors embrayé en patinant de telle sorte que le couple d'accouplement ($M_K$) transmis par l'accouplement (4) augmente de façon linéaire dans le temps à partir d'une deuxième valeur de départ ($M_K$, A2) jusqu'à ce que le moteur à combustion interne (2) non allumé commence à tourner, le couple de décollage du moteur à combustion interne (2) étant déterminé à partir du couple d'accouplement ($M_K$) auquel le moteur à combustion interne (2) commence à tourner.

**2.** Procédé selon la revendication 1, **caractérisé en ce que** la deuxième valeur de départ ($M_K$, A2) est supérieure à la première valeur de départ ($M_K$, A1) et de préférence supérieure à la première valeur finale ($M_K$, E1).

**3.** Procédé selon la revendication 1 ou 2, **caractérisé en ce que** le couple de décollage déterminé du moteur à combustion interne (2) est compensé avec une valeur de décalage de sécurité et **en ce que** la première valeur finale ($M_K$, E1) est adaptée en fonction du couple ainsi déterminé.

**4.** Procédé selon la revendication 3, **caractérisé en ce que** la première valeur finale ($M_K$, E1) est adaptée de telle sorte que le couple déterminé à partir du couple de décollage et de la valeur de décalage de sécurité est utilisé comme nouvelle première valeur finale, à savoir notamment lorsque le moteur à combustion interne (2) non allumé commence à tourner lors de l'augmentation du couple d'accouplement à partir de la première valeur de départ ($M_K$, A1).

**5.** Procédé selon la revendication 3, **caractérisé en ce que** la première valeur finale ($M_K$, E1) est adaptée de telle sorte que le couple déterminé à partir du couple de décollage et de la valeur de décalage de sécurité est compensé avec la première valeur finale actuelle en vue de déterminer une nouvelle première valeur finale, à savoir notamment lorsque le moteur à combustion interne (2) non allumé commence à tourner lors de l'augmentation du couple d'accouplement à partir de la deuxième valeur de départ ($M_K$, A2).

**6.** Procédé selon l'une des revendications 1 à 5, **caractérisé en ce que** lorsque le moteur à combustion interne (2) est en rotation mais n'est pas allumé, le couple de friction du moteur à combustion interne (2) est déterminé mathématiquement en définissant le bilan de couple suivant :

$$M_{VM,REIB} = M_K - J_{GES1} * \frac{d}{dt}(w(t)) \, ,$$

où $M_{VM,\,REIB}$ désigne le couple de friction du moteur à combustion interne (2), $M_K$ désigne le couple d'accouplement transmis par l'accouplement (4) patinant connecté entre le moteur à combustion interne (2) et le moteur électrique (3), $J_{GES1}$ désigne le moment d'inertie de la chaîne de transmission (1) jusqu'à l'accouplement (4) qui patine et w désigne la vitesse angulaire de rotation du moteur à combustion interne (2).

**7.** Procédé pour faire fonctionner une chaîne de transmission (1) d'un véhicule automobile, la chaîne de transmission (1) incluant au moins un groupe propulseur hybride comprenant un moteur à combustion interne (2) et un moteur électrique (3), un accouplement (4) connecté entre le moteur à combustion interne (2) et le moteur électrique (3), une boîte de vitesses (5) disposée entre le groupe propulseur hybride et une prise de force, ainsi qu'un élément de démarrage (9 ; 7), de préférence interne à la boîte de vitesses ou externe à la boîte de vitesses, procédé selon lequel, lors du démarrage assisté du moteur à combustion interne (2) à l'aide du moteur électrique (3), l'accouplement (4) connecté entre le moteur à combustion interne (2) non allumé et le moteur électrique (3) est complètement embrayé et le couple de moteur électrique délivré par le moteur électrique (3) augmente de façon linéaire dans le temps à partir d'une première valeur de départ ($M_K$, A1) jusqu'à une première valeur finale ($M_K$, E1), **caractérisé en ce que** lorsque le moteur à combustion interne (2) non allumé commence ainsi à tourner, le couple de décollage du moteur à combustion interne (2) est déterminé à partir du couple de moteur électrique ($M_{EM}$) auquel le moteur à combustion interne (2) non allumé commence à tourner, et lorsque le moteur à combustion interne (2) non allumé ne commence ainsi pas à tourner, le couple de moteur électrique ($M_{EM}$) délivré par le moteur électrique (3) augmentant alors de façon linéaire à partir d'une deuxième valeur de départ ($M_K$, A2) jusqu'à ce que le moteur à combustion interne (2) non allumé commence à tourner, le couple de décollage du moteur à combustion interne (2) étant déterminé à partir du couple de moteur électrique ($M_{EM}$) auquel le moteur à combustion interne (2) commence à tourner.

**8.** Procédé selon la revendication 7, **caractérisé en ce que** la deuxième valeur de départ ($M_K$, A2) est supérieure à la première valeur de départ ($M_K$, A1) et de préférence supérieure à la première valeur finale ($M_K$, E1).

**9.** Procédé selon la revendication 7 ou 8, **caractérisé en ce que** le couple de décollage déterminé du moteur à combustion interne (2) est compensé avec une valeur de décalage de sécurité et **en ce que** la première valeur finale (M$_K$, E1) est adaptée en fonction du couple ainsi déterminé.

**10.** Procédé selon la revendication 9, **caractérisé en ce que** la première valeur finale (M$_K$, E1) est adaptée de telle sorte que le couple déterminé à partir du couple de décollage et de la valeur de décalage de sécurité est utilisé comme nouvelle première valeur finale, à savoir notamment lorsque le moteur à combustion interne (2) non allumé commence à tourner lors de l'augmentation du couple de moteur électrique (M$_{EM}$) à partir de la première valeur de départ.

**11.** Procédé selon la revendication 9, **caractérisé en ce que** la première valeur finale (M$_K$, E1) est adaptée de telle sorte que le couple déterminé à partir du couple de décollage et de la valeur de décalage de sécurité est compensé avec la première valeur finale actuelle en vue de déterminer une nouvelle première valeur finale, à savoir notamment lorsque le moteur à combustion interne (2) non allumé commence à tourner lors de l'augmentation du couple de moteur électrique (M$_{EM}$) à partir de la deuxième valeur de départ.

**12.** Procédé selon l'une des revendications 7 à 11, **caractérisé en ce que** lorsque le moteur à combustion interne (2) est en rotation mais n'est pas allumé, le couple de friction du moteur à combustion interne (2) est déterminé mathématiquement en définissant le bilan de couple suivant :

$$M_{VM,REIB} = M_{EM} - J_{GES2} * \frac{d}{dt}(w(t)),$$

où M$_{VM, REIB}$ désigne le couple de friction du moteur à combustion interne (2), M$_{EM}$ désigne le couple de moteur électrique délivré par le moteur électrique (3), J$_{GES2}$ désigne le moment d'inertie de la chaîne de transmission (1) et w désigne la vitesse angulaire de rotation du moteur à combustion interne (2).

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006048358 A1